Europäisches Patentamt

European Patent Office

Office européen des brevets

(11) Veröffentlichungsnummer: **0 524 390 A2**

# EUROPÄISCHE PATENTANMELDUNG

(21) Anmeldenummer: **92108267.3**

(22) Anmeldetag: **15.05.92**

(51) Int. Cl.5: **H04B 10/24**

(30) Priorität: **26.07.91 DE 4125105**

(43) Veröffentlichungstag der Anmeldung:
**27.01.93 Patentblatt 93/04**

(84) Benannte Vertragsstaaten:
**AT BE CH DE DK ES FR GB GR IT LI LU MC NL PT SE**

(71) Anmelder: **KRONE Aktiengesellschaft**
**Beeskowdamm 3-11**
**W-1000 Berlin 37(DE)**

(72) Erfinder: **Franzke, Jörg, Dipl.-Ing.**
**Am Hirschwechsel 20**
**W-1000 Berlin 37(DE)**
Erfinder: **Bresche, Peter, Dipl.-Ing.**
**Tegeler Weg 3**
**W-1000 Berlin 10(DE)**
Erfinder: **Lilientahl, Harald, Dipl.-Ing.**
**Spessartstrasse 22**
**W-1000 Berlin 33(DE)**
Erfinder: **Huynh, Hon, Dipl.-Ing.**
**Lipschitzallee 46**
**W-1000 Berlin 37(DE)**

(54) **Bidirektionale Datenübertragung auf einem Lichtwellenleiter.**

(57) Die Erfindung bezieht sich auf ein Verfahren zur digitalen, bidirektionalen Datenübertragung auf einem Lichtwellenleiter.

Es wird sowohl für die Hin- als auch Rückrichtung der Datenübertragung Lichtpulse derselben Frequenz benutzt. Die zu übertragenden Pulse werden von einer ursprünglichen Breite $T_b$ auf eine Breite $T_r$ reduziert, wobei das Puls/Pausenverhältnis $T_r/(T_b - T_r)$ kleiner als Eins sein muß. Die zweite Sende/Empfangseinheit darf nur während einer Empfangspause $(T_b - T_r)$ senden. Um eine optimale Verteilung der optischen Pulse auf dem Lichtwellenleiter 3 zu erreichen, mißt die erste Sende/Empfangseinheit 1 das Timing auf dem Lichtwellenleiter 3 und veranlaßt gegebenenfalls durch ein Modify-Signal die zweite Sende/Empfangseinheit 2 zu einem veränderten Sendezeitpunkt ihrer optischen Signale. Somit ergibt sich eine Regelschleife, die selbsttätig innerhalb gewisser Grenzen eine optimale Pulsverteilung auf dem Lichtwellenleiter erzielt.

FIG.3

Die Erfindung bezieht sich auf ein Verfahren und eine darauf bezogene Vorrichtung zur digitalen, bidirektionalen Datenübertragung auf einem Lichtwellenleiter gemäß dem Oberbegriff des Anspruches 1, wobei der Lichtwellenleiter zwei Sender/Empfangseinheiten miteinander verbindet.

Das einfachste bekannte Verfahren einer bidirektionalen Datenübertragung über Lichtwellenleitern beinhaltet für jede Richtung der Übertragung einen gesonderten Lichtwellenleiter. Nachteilig hierbei sind die hohen Kosten im Weitverkehr, die durch die Verwendung und Verlegung einer Lichtwellenleiter für jede Übertragungsrichtung entstehen.

Desweiteren ist eine Wellenlängen-Multiplex-Methode bekannt, bei der jeweils unterschiedliche Wellenlängen bzw. Frequenzen für jede Übertragungsrichtung benutzt werden. So kann man beispielsweise eine Wellenlänge von $\lambda_1$ = 1300 nm für die eine Richtung und eine Wellenlänge von beispielsweise $\lambda_2$ = 1550 nm für die andere Richtung benutzen. Durch die Verwendung verschiedener Wellenlängen des übertragenden Lichtes kann die Übertragung beider Richtungen auf einer einzigen Lichtwellenleiter erfolgen. Jede der beiden Sender/Empfangseinheiten muß ein wellenlängenselektives Bauelement ( Multiplexer ) aufweisen, welches für die Trennung der beiden Wellenlängen benutzt wird. Liegt der Abstand der beiden Wellenlängen $\Delta\lambda = \lambda_2 - \lambda_1$ innerhalb der Bandbreite der Empfindlichkeit der benutzten optischen Empfänger, so braucht man keine Unterscheidung zwischen den beiden Wellenlängen im optischen Empfänger zu machen. Nachteilig hierbei ist, daß die wellenlängenselektiven Elemente eine hohe Trennschärfe bzw. Dämpfung aufweisen müssen, so daß nur sehr gute Multiplexer mit einer hoher Wellenlängen-Isolation zur Anwendung gelangen. Diese sind sehr kostenintensiv. Zusätzlich benötigt eine einwandfreie Nachrichtenübertragung über lange Strecken eine Dämpfung von mindestens 50 db zwischen den beiden Kanälen, um ein Nebensprechen zwischen den Kanälen zu vermeiden.

Als weiteres Verfahren ist die Paket-Übertragung vorbekannt, bei der über eine einzige Lichtwellenleiter abwechselnd für beide Richtungen die Daten in Form von Paketen übertragen werden. Am Anfang und Ende jedes Paketes wird eine Start- bzw. Stopinformation für die Steuerung und Überwachung der Übertragung eingefügt. Nachdem die Stopinformation an der aktuellen Empfängerseite empfangen und ausgewertet ist, kann der Sender der Gegenrichtung seine Daten als Paket, welches ebenfalls mit Start-und Stopinformationen versehen ist, über die Übertragungsstrecke senden. Dabei ist zu beachten, daß zwischen zwei Paketen eine lange Pause eingehalten werden muß, die wegender Übertragungslaufzeit mindestens so lang wie die Laufzeit über die Übertragungsstrecke sein muß. Nachteilig hierbei ist, daß wegen der großen Pausen die Übertragungsstrecke nicht optimal ausgenutzt wird. Außerdem benötigt das Paketübertragungsverfahren eine aufwendige Taktrückgewinnung, große Datenraten und eine komplizierte Steuerung. In Abhängigkeit von der Paketlänge ist unter Umständen einer hoher Speicherbedarf nötig.

Der Erfindung liegt von daher die Aufgabe zugrunde, ein einfaches und kostengünstiges Verfahren zur optischen bidirektionalen Datenübertragung auf einem Lichtwellenleiter zu entwickeln, welches nur mit einer Lichtfrequenz arbeitet und die Nachteile der bekannten Verfahren vermeidet.

Die Lösung dieser Aufgabe ergibt sich aus den kennzeichnenden Merkmalen des Anspruches 1.

Erfindungsgemäß erfolgt die Übertragung des Datenstromes für beide Richtungen gleichzeitig, wobei für beide Richtungen die gleiche Lichtwellenlänge benutzt wird. Daß dabei auftretende Problem der Entkopplung von Sender und Empfänger der gleichen Sende/Empfangseinheit, welches bei der Verwendung von optischen Signalen gleicher Wellenlänge für die bidirektionale Übertragung auf einer Lichtwellenleiter auftritt, wird dadurch gelöst, daß die ursprünglichen Pulsbreiten der zu übertragenden Signale $T_b$ zur optischen Übertragung auf eine kleinere Pulsbreite $T_r$ reduziert wird. Dies entspricht einer RZ-Codierung, wobei das Puls/Pausenverhältnis $T_r/(T_b-T_r)$ erfindungsgemäß kleiner als Eins gewählt wird. Dieses pulsbreiten reduzierte Signal der Länge $T_r$ wird über die Lichtwellenleiter von der ersten zur zweiten Sende/Empfangseinheit übertragen und dort auf einen zweiten Empfänger geleitet. Anschließend erfolgt eine Impulsbreitenkorrektur, so daß der Datenpuls wieder seine ursprüngliche Breite $T_b$ erhält. Dadurch entsteht an der zweiten Send/Empfangseinheit eine Empfangspause ($T_b$ - $T_r$), welche durch den zweiten Sender zum Aussenden eines auf die Pulsbreite $T_r$ reduzierten Pulses in Richtung der ersten Sende/Empfangseinheit1 genutzt werden kann. Der zweite Sender sendet folglich immer nur in der sogenannten Empfangspause ($T_b-T_r$).

Für bestimmte Lichtwellenleiterlängen führt dies am ersten Empfänger zu einem optimalen Timing zwischen den Signalen der beiden Sende/Empfangseinheiten. Bei anderen Übertragungslängen der Lichtwellenleiter besteht die Möglichkeit, daß sich die Signale vom ersten und zweiten Sender am ersten Empfänger überlagern und es zu einem Übersprechen kommt.

Um dem zu begegnen, führt die erste Sende/Empfangseinheit eine Überwachung des Puls-Timings auf dem Lichtwellenleiter durch und veranlaßt die zweite Sende/Empfangseinheit im Bedarfsfalle mittels eines Modify-Signals zu einer Veränderung ihres Sendezeitpunktes innerhalb der Empfangspause. Diese Veränderung des Sendezeitpunktes am zweiten Sender wird solange vorgenommen, bis sich an der ersten Sende/Empfangseinheit ein optimales Timing zwischen den Signalen der beiden Sender einstellt. Es handelt sich folglich um eine rückgekoppelte Regelschleife. Die Übertragung des Modify-Signals kann an beliebiger Stelle innerhalb des Datenstromes erfolgen oder es kann zur Übertragung ein eigener Zeitschlitz zur Verfügung gestellt werden.

Weitere vorteilhafte Ausgestaltungen der Erfindung ergeben sich aus den Unteransprüchen.

So wird die empfangsseitige Datenverarbeitung in einer Sende/Empfangseinheit angehalten, falls der jeweilige Sender ein optisches Signal sendet. Damit wird ein Übersprechen verhindert, bzw. ausgeblendet.

Die Entscheidung, ob ein Signaltiming günstig ist oder nicht, kann durch eine Messung des Bit- und/oder Codefehlers der Übertragung vorgenommen werden.

Die Erfindung ist anhand einer in den Zeichnungen dargestellten bevorzugten Ausführungsform näher erläutert. Es zeigen:

Fig. 1 ein prinzipielles Blockschaltbild einer bidirektionalen Datenübertragung auf einem Lichtwellenleiter,

Fig. 2 ein erweitertes Blockschaltbild einer bidirektionalen Datenübertragung,

Fig. 3 ein Blockschaltbild der erfindungsgemäßen Vorrichtung mit seinen Komponenten,

Fig. 4 ein Pulsverteilungsdiagramm für eine optimale Verteilung der Signale und

Fig. 5 ein Pulsverteilungsdiagramm für verschiedene Sendezeiten des Rückpulses.

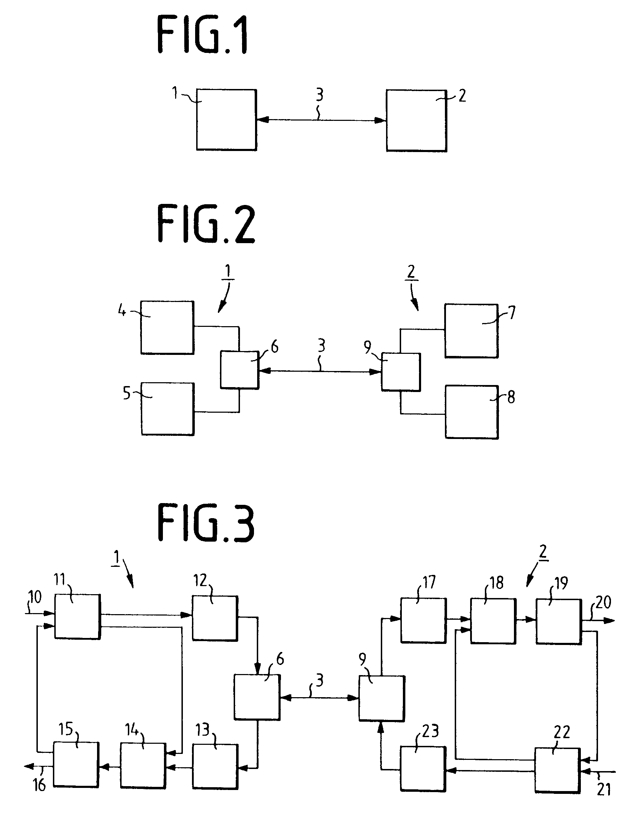

Fig. 1 zeigt die Verbindung einer ersten Sende/Empfangseinheit 1 mit einer zweiten Sende/Empfangseinheit 2 durch einen Lichtwellenleiter 3. Die Datenübertragung erfolgt in beiden Richtungen gleichzeitig, d.h. bidirektional, und die benutzte Frequenz der optischen Sendepulse ist für beide Richtungen gleich.

Fig. 2 zeigt den prinzipiellen Aufbau der Sende/Empfangseinheiten 1,2 in größerem Detail. Die Sende/Empfangseinheit 1 umfaßt eine erste Sendeeinheit 4 und eine erste Empfangseinheit 5. Mittels eines optischen Koppelelementes 6 werden die Daten von der Sendeeinheit 4 auf den Lichtwellenleiter 3 gegeben bzw. Daten vom Lichtwellenleiter 3 in die Empfangseinheit 5 geleitet. Die zweite Sende/Empfangseinheit 2 umfaßt die analogen Komponenten zweite Empfangseinheit 7, zweite Sendeeinheit 8 und ein optisches Koppelelement 9 zum Ein- bzw. Auskoppeln von Daten in bzw. aus dem Lichtwellenleiter 3.

Ein Blockschaltbild einer bevorzugten Ausführung zur Durchführung des erfindungsgemäßen Verfahrens ist in Fig. 3 dargestellt. Zu beiden Seiten des Lichtwellenleiters 3 befinden sich die Sende/Empfangseinheiten 1 und 2. Dabei umfaßt die erste Sende/Empfangseinheit 1 einen Dateneingang 10, der die zu übertragenden digitalen Daten mit der Pulsbreite $T_b$ in eine Datenaufbereitung 11 leitet. In der Datenaufbereitung 11 wird die Pulsbreite von der ursprünglichen Breite $T_b$ auf die reduzierte Breite $T_r$ verkleinert. Mit diesen breitenreduzierten elektrischen Pulsen wird ein erster optischer Sender 12 angesteuert, der entsprechend den elektrischen Pulsen optische Sendepulse der Länge $T_r$ erzeugt. Mittels des optischen Koppelelementes 6 werden die optischen Sendepulse auf den Lichtwellenleiter 3 gegeben. Von der zweiten Sende/Empfangseinheit 2 kommende optische Pulse werden von dem optischen Koppelelement 6 in einen optischen Empfänger 13 geleitet und dort in elektrische Signale der Pulsbreite $T_r$ verwandelt. Die gewandelten Pulse gelangen in eine Pulsbreitenkorrektur 14, die die Pulse wieder auf ihre ursprüngliche Pulsbreite $T_b$ verbreitert. Der Pulsbreitenkorrektur 14 wird das Ausgangssignal der Datenaufbereitung 11 eingespeist, so daß zu den Zeiten, in denen der optische Sender 12 mit der Pulsdauer $T_r$ sendet, die Pulsbreitenkorrektur 14 blockiert bzw. ausgeschaltet ist. Dadurch wird ein Übersprechen zwischen abgehenden optischen Signalen der Sende/Empfangseinheit 1 und eventuell ankommenden Signalen der Sende/Empfangseinheit 2 verhindert. Die pulsbreitenkorrigierte Daten gelangen in eine Bit-/Codefehlermessung 15, die zum Erkennen eines ungünstigen Timings zwischen gesendeten und empfangenen optischen Signalen dient. Fällt die Messung positiv aus, werden die gültigen Daten auf einen Datenausgang 16 gegeben. Anderenfalls wird über eine Verbindung der Bit-/Codefehlermessung 15 mit der Datenaufbereitung 11 über den optischen Sender 12 und dem Koppelelement 6 ein Modify-Signal auf den Lichtwellenleiter 3 gegeben, der eine Änderung des Zeitverhaltens der zweiten Sende/Empfangseinheit 2 bewirkt.

Die zweite Sende/Empfangseinheit 2 umfaßt einen optischen Koppler 9, der die optischen Signale des Lichtwellenleiters 3 aus- bzw. einkoppelt. Ankommende optische Signale werden von dem optischen Koppelelement 9 einem optischen Empfänger 17 zugeführt, der die optischen Signale der Länge $T_r$ in elektrische Signale der gleichen Länge wandelt. Die gewandelten Signale werden einer Pulsbreitenkorrektur 18 zugeführt, die die Pulse wieder auf die ursprüngliche Länge $T_b$ verbreitert. Eine anschließende Steuersignalauskopplung 19 dient dazu, aus dem Datenstrom Steuersignale, insbesondere das Modify-Signal, auszusondern.

Gültige Daten werden dem Datenausgang 20 zugeführt. Die erkannten Steuersignale werden der Datenaufbereitung 22 zusammen mit dem Dateneingang 21 zugeführt. Die Datenaufbereitung 22 verändert in Abhängigkeit von den Steuersignalen der Steuersignalauskopplung 19 das Signaltiming, d.h. den Zeitpunkt des Aussenden eines Signales in der Empfangspause und reduziert die Pulsbreite der Daten von der ursprünglichen Breite $T_b$ auf $T_r$. Die elektrischen Signale werden einerseits einem optischen Sender 23 zugeführt, der eine elektro/optische Wandlung der Signale durchführt, und gleichzeitig wird die Pulsbreitenkorrektur 18 mit dem Sendesignal beaufschlagt. Während des Sendens eines Signales wird folglich die Pulsbreitenkorrektur 18 blockiert, so daß ein Übersprechens der beiden optischen Sender ausgeblendet wird. Der optische Koppler 9 koppelt das Sendesignal auf den Lichtwellenleiter 3 ein.

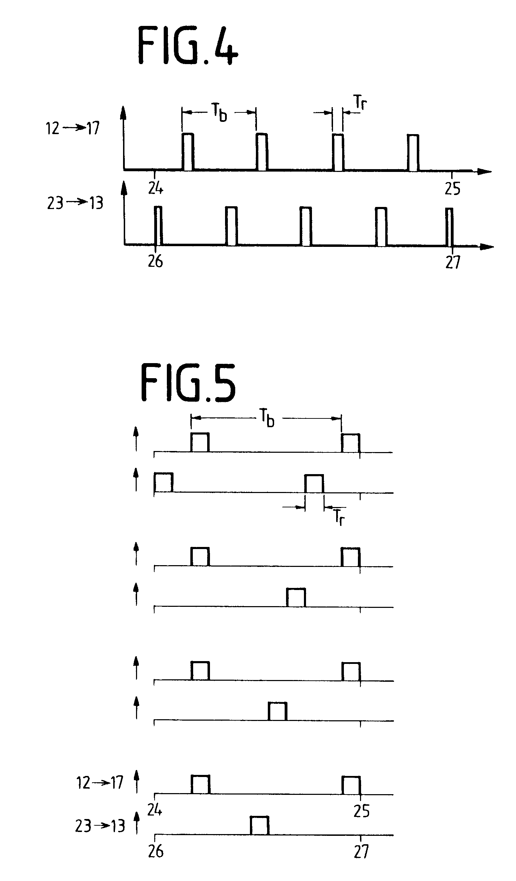

Fig. 4 zeigt ein optimale Verteilung der optischen Signale, d.h. ein optimales Timing, auf dem Lichtwellenleiter 3. Dargestellt ist in der Horizontalen die Glasfaserlänge und in der Vertikalen die Pulsamplitude. Betrachtet wird die Verteilung zu einem beliebigen aber festen Zeitpunkt $t = t_1$. Der obere Teil der Fig. 4 enthält die Richtung der Sende/Empfangseinheit 1 nach Sende/Empfangseinheit 2 , während der untere Teil die Gegenrichtung enthält. Auf der oberen horizontalen Achse markiert 24 den Ort des optischen Senders 12 und 25 den Ort des optischen Empfängers 17 auf dem Lichtwellenleiter 3. Analog bedeutet auf der unteren horizontalen Achse 26 der Ort des optischen Empfängers 13 und 27 der Ort des optischen Senders 23 auf dem Lichtwellenleiter 3. Die Pulse haben die reduzierte Breite $T_r$. Die ursprüngliche Pulsbreite $T_b$ ist in der Fig. 4 gegeben durch den Abstand der ersten ansteigenden Flanke eines Pulses zu der ansteigenden Flanke eines nächsten Pulses. Eine optimale Signalverteilung liegt dann vor, wenn der Puls in der Rückwärtsrichtung, hier dargestellt durch den unteren Teil der Fig. 4, ungefähr in der Mitte der Empfangspulspause ($T_b$ - $T_r$) liegt.

Fig. 5 zeigt schematisch, wie der von der Sende/Empfangseinheit 2 abgehende optische Puls relativ zu einem Puls der Richtung Sende/Empfangseinheit 1 nach Sende/Empfangseinheit 2 zeitlich verschoben werden kann. Aufgetragen ist in horizontaler Richtung die Glasfaserlänge, und in vertikaler Richtung die Pulsamplitude. Der obere Teil der jeweils vier Diagramme bedeutet die Übertragungsrichtung vom ersten optischen Sender 12 zum zweiten optischen Empfänger 17 und der untere Teil die Richtung vom zweiten optischen Sender 23 zum ersten optischen Empfänger 13. Dargestellt auf den horizontalen Achsen ist weiterhin der Ort des optischen Senders 24, der Ort des zweiten optischen Empfängers 25, der Ort des ersten optischen Empfängers 26 und der Ort des zweiten optischen Senders 27. Die Situation der Senderichtung 12 nach 17 ist in allen vier Unterdiagrammen dieselbe, nämlich daß am Ort des zweiten optischen Empfängers 25 gerade die ansteigende Flanke eines optischen Sendepulses $T_r$ ansteht. Der Abstand zwischen den beiden ansteigenden Flanken der dargestellten Sendepulse ist wie in Fig. 4 die ursprüngliche Pulsbreite $T_b$. Der untere Teil der jeweils vier Unterdiagramme zeigt, daß bedingt durch das " Modify-Signal " der zeitliche und damit auch der räumliche Ort der Rückimpulse relativ verschoben wird. Zwischen der Sende/Empfangseinheit 1 und der Sende/Empfangseinheit 2 liegt ein Master-Slave Verhältnis vor, d.h. der Master ( Sende/Empfangseinheit 1 ) entscheidet, ob das Timing-Verhalten der optischen Pulse auf dem Lichtwellenleiter 3 in den beiden Richtungen günstig ist oder nicht, und veranlaßt im ungünstigen Falle den Slave ( Sende/Empfangseinheit 2 ) durch ein Modify-Signal den Zeitpunkt seines auszusenden optischen Signales in der Empfangspause ( $T_b$ - $T_r$ ) zu verändern. Die Entscheidung, ob ein Timing günstig oder ungünstig ist, wird durch die Bit-/Codefehlerprüfung vorgenommen. Es wird folglich eine Regelschleife aufgebaut, in der das Timing solange verändert wird, bis die Messung an der Sende/Empfangseinheit 1 ein optimales Timing der Sendepulse ergibt.

Bezugszeichenliste
----------

| | |
|---|---|
| 1 | erste Sender/Empfängereinheit |
| 2 | zweite Sender/Empfängereinheit |
| 3 | Lichtwellenleiter |
| 4 | erste Sendereinheit |
| 5 | erste Empfängereinheit |
| 6 | optisches Koppelelement |
| 7 | zweite Empfängereinheit |
| 8 | zweite Sendereinheit |
| 9 | optisches Koppelelement |
| 10 | Dateneingang |
| 11 | Datenaufbereitung |
| 12 | erster optischer Sender |
| 13 | erster optischer Empfänger |
| 14 | Impulsbreitenkorrektur |
| 15 | Bit-/Codefehlermessung |
| 16 | Datenausgang |
| 17 | zweiter optischer Empfänger |
| 18 | Impulsbreitenkorrektur |
| 19 | Steuersignalauskopplung |
| 20 | Datenausgang |
| 21 | Dateneingang |
| 22 | Datenaufbereitung |
| 23 | zweiter optischer Sender |
| 24 | Ort des opt. Senders 12 |

25 Ort des opt. Empfängers 17
26 Ort des opt. Empfängers 13
27 Ort des opt. Senders 23

## Patentansprüche

1. Verfahren zur bidirektionalen, digitalen Datenübertragung auf einem Lichtwellenleiter (3), welcher an beiden Enden jeweils eine Sender/Empfangseinheit (1,2) aufweist, **dadurch gekennzeichnet,** daß der Datenstrom in beiden Richtungen gleichzeitig und bei einer Frequenz für die optischen Signale erfolgt, daß die optischen Signale eine Pulsbreite $T_r$ aufweisen, welche gegenüber der Pulsbreite $T_b$ der zu übertragenden Daten reduziert ist, wobei das Verhältnis $T_r/(T_b-T_r)$ kleiner als Eins ist und daß die zweite Sende/Empfangseinheit (2) nur innerhalb einer Empfangspause $(T_b-T_r)$ ein pulsbreitenreduziertes Signal $T_r$ zur ersten Sende/Empfangseinheit (1) sendet.

2. Verfahren nach Anspruch 1, dadurch gekennzeichnet, daß die erste Sende/Empfangseinheit (1) das Timing auf dem Lichtwellenleiter (3) überwacht und der zweiten Sende/Empfangseinheit (2) die Steuerung des Timings über ein Modify-Signal mitteilt.

3. Verfahren nach Anspruch 2, dadurch gekennzeichnet, daß die empfangenen optischen Signale in der jeweiligen Sender/Empfangseinheit (1,2) elektro/optisch gewandelt und durch eine Impulsbreitenkorrektur auf ihre ursprüngliche Länge $T_b$ zurück verbreitert werden.

4. Verfahren nach Anspruch 3, dadurch gekennzeichnet, daß die Impulsbreitenkorrektur ein Ausblenden des Übersprechens zwischen beiden Sendern vornimmt.

5. Verfahren nach Anspruch 4, dadurch gekennzeichnet, daß als Steuerkriterium für das Timing eine Bitfehler- und/oder Codefehlerauswertung in der ersten Sende/Empfangseinheit (1) vorgenommen wird.

6. Verfahren nach Anspruch 5, dadurch gekennzeichnet, daß das Modify-Signal an beliebiger Stelle innerhalb der übertragenen Daten eingeschleust wird.

7. Verfahren nach Anspruch 6, dadurch gekennzeichnet, daß für das Modify-Signal ein eigener Zeitschlitz bereitgestellt wird.

8. Vorrichtung zur Durchführung des Verfahrens nach einem oder mehreren der vorangegangenen Ansprüche, dadurch gekennzeichnet, daß die Sende/Empfangseinheit (1) einen Dateneingang (10), eine Datenaufbereitung (11), einen optischen Sender (12), ein optisches Koppelelement (6), einen optischen Empfänger (13), eine Impulsbreitenkorrektur (14), eine Bit-/Codefehlermessung (15) und einen Datenausgang (16) aufweist, die miteinander verbunden sind, wobei der Ausgang der Datenaufbereitung (11) mit dem Eingang der Impulsbreitenkorrektur (14) und der Ausgang der Bit-/Codefehlermessung (15) mit dem Eingang der Datenaufbereitung (11) verbunden sind und daß die zweite Sende/Empfangseinheit (2) einen Dateneingang (21), eine Datenaufbereitung (22), einen optischen Sender (23), ein optisches Koppelelement (9), einen optischen Empfänger (17), eine Impulsbreitenkorrektur (18), eine Steuersignalauskopplung (19) und einen Datenausgang (20) aufweist, die miteinander verbunden sind, wobei der Ausgang der Datenaufbereitung (22) mit dem Eingang der Impulsbreitenkorrektur (18) und der Ausgang der Steuersignalauskopplung (19) mit dem Eingang der Datenaufbereitung (22) verbunden sind.

9. Vorrichtung nach Anspruch 8, dadurch gekennzeichnet, daß die Sende/Empfangseinheit (1) die Funktion eines Masters und die Sende/Empfangseinheit (2) die eines Slave hat.

EP 0 524 390 A2

# FIG.1

# FIG.2

# FIG.3

# FIG.4

# FIG.5